# EUROPÄISCHE PATENTSCHRIFT

(11) **EP 3 189 903 B1**
(45) Veröffentlichungstag und Bekanntmachung des Hinweises auf die Patenterteilung: **29.01.2020**
(21) Anmeldenummer: 16202661.1
(22) Anmeldetag: 07.12.2016
(51) Int. Cl.: B07C 3/00

(54) **VERFAHREN UND FAHRZEUG ZUM ZUSTELLEN VON SENDUNGEN**
METHOD AND VEHICLE FOR DELIVERING POSTAL ITEMS
PROCÉDÉ ET VÉHICULE DESTINÉ À DISTRIBUER DES EXPÉDITIONS

(30) Priorität: 08.01.2016 DE 102016100244
(43) Veröffentlichungstag der Anmeldung: 12.07.2017
(73) Patentinhaber: Deutsche Post AG, 53113 Bonn (DE)
(72) Erfinder: Schneebeck, Holger, 50968 Köln (DE); Trendafilov, Boris, 53757 Sankt Augustin (DE); Drees, Sandra, 53639 Königswinter (DE); Bischoff, Heike, 51143 Köln (DE); Huber, Antje, 53115 Bonn (DE)
(74) Vertreter: Cohausz & Florack

(56) Entgegenhaltungen:
- DE-A1- 2 031 442
- DE-A1-102009 024 195
- DE-C1- 4 412 097
- DE-U1- 20 021 257
- DE-U1- 20 314 968
- GB-A- 811 615
- US-A- 4 232 988
- US-A- 4 254 872

## Beschreibung

Die Erfindung betrifft ein Verfahren sowie ein Fahrzeug zum Zustellen von Sendungen.

Sendungen werden vor ihrer Zustellung bei den Adressaten der Sendungen vielfach in einer Zustellbasis vorsortiert und nach dem räumlichen Gebiet der Adressaten gruppiert. Bei der Zustellbasis kann es sich beispielsweise um ein sogenanntes Paketzentrum, ein Warenlager oder dergleichen handeln. Die gruppierten Sendungen werden von einem Zustellfahrzeug an der Zustellbasis übernommen und mit diesem zu den Adressaten der Sendungen oder zu entsprechenden Abgabestellen, wie beispielsweise Paketkästen oder Packstationen, gefahren, wo dann nach Möglichkeit die Zustellung bewirkt wird.

Beim Einladen der Sendungen in das Zustellfahrzeug werden die Sendungen bzw. darauf vorgesehene Codes einzeln gescannt und in Abhängigkeit von der Adresse des Adressaten oder der Abgabestellen auf eine bestimmte Position eines Regalsystems im Zustellfahrzeug gelegt. Dies wird in der Regel von dem Zusteller selbst durchgeführt, der auch das Fahrzeug fährt und die Sendungen an den dafür vorgesehenen Orten zustellt. So wird dokumentiert, dass der Zusteller alle Sendungen übernommen hat. Zudem ist eine Sendungsverfolgung möglich und der Fahrer bzw. Zusteller weiß genau, welche Orte er zum Zwecke der Zustellung anzufahren hat. Der Zusteller kann anhand der analogen, auf den Sendungen vorgesehenen Adressinformationen seine Route festlegen. Das eigentliche Zustellen der Sendungen kann dann beispielsweise durch persönliche Übergabe an den Adressaten oder eine autorisierte Person sowie durch Hinterlegen an einer bestimmten Abgabestelle, etwa einem Paketkasten oder einer Packstation, erfolgen.

Zudem sind Verfahren bekannt, bei denen Sendungen zunächst in Sendungsmagazinen, etwa in Form von Rollcontainern oder Wechselbrücken, verstaut und dann zwecks Zustellung der Sendungen verladen werden. Da der Zugang der einzelnen Sendungen auf dem Zustellfahrzeug erschwert ist, erfolgt diese Vorgehensweise insbesondere zur Zustellung vieler Sendungen an wenige Adressaten, wobei die Sendungen vorab abhängig von den Adressaten auf unterschiedliche Sendungsmagazine verteilt werden können. Dem Adressaten, bei dem es sich meist um ein Unternehmen und eher selten um eine Privatperson handelt, werden also vorzugsweise alle Sendungen eines Sendungsmagazins, etwa in Form eines Rollcontainers oder einer Wechselbrücke, insbesondere das entsprechende Sendungsmagazin mitsamt den entsprechenden Sendungen übergeben. Dies kann beispielsweise im Austausch gegen ein leeres Sendungsmagazin erfolgen, so dass sich die Sendungsmagazine nicht bei Adressaten ansammeln und schnell wieder für die Zustellung weiterer Sendungen zur Verfügung stehen.

Als Sendungen werden vorliegend recht unterschiedliche Gegenstände angesehen, die vorzugsweise hinsichtlich ihrer Größe und ihres Gewichts mit überschaubarem Aufwand transportiert werden können. Insbesondere können die Sendungen als Stückgut vorliegen. Dabei kommen Gegenstände des täglichen Bedarfs, wie Verbrauchsmaterialien oder Lebensmittel ebenso in Frage wie technische Gegenstände und Gerätschaften. In vielen Fällen handelt es sich bei den Sendungen um Briefsendungen, Paketsendungen und/oder Flyer. Dabei umfassen Paketsendungen auch Päckchen, während Flyer auch Prospekte, Broschüren und Zeitschriften sein können. Zudem kann eine Briefsendung neben einem Brief auch eine Postkarte sein.

Die Effizienz der Zustellung kann durch eine Reihe von Faktoren nachteilig beeinflusst werden. Die effiziente Zustellung der Sendungen kann beispielsweise durch ein erhöhtes Verkehrsaufkommen, nicht anwesende Adressaten, unzweckmäßige Zustellrouten des Zustellfahrzeugs oder andere Unzulänglichkeiten beeinträchtigt werden. Gleichfalls werden immer höhere Anforderungen an eine möglichst schnelle und kostengünstige Zustellung von Sendungen gestellt, wobei sich gleichzeitig die Anzahl der zuzustellenden Sendungen immer weiter erhöht.

Fahrzeuge zum Zustellen von Sendungen mit einem lösbar mit dem Fahrzeug gekoppelten Sendungsmagazin zur Aufnahme, Lagerung und Abgabe von Sendungen sind in der DE 10 2009 024 195 A1 und DE 44 12 097 C1 beschrieben.

Daher liegt der vorliegenden Erfindung die Aufgabe zugrunde, das Verfahren und das Fahrzeug jeweils der eingangs genannten und zuvor näher erläuterten Art derart auszugestalten und weiterzubilden, dass die Zustellung von Sendungen effizienter gestaltet werden kann.

Diese Aufgabe ist gemäß Anspruch 1 gelöst durch ein Verfahren zum Zustellen von Sendungen,
- bei dem in einer Zustellbasis unterschiedliche Sendungskammern eines Sendungsmagazins mit unterschiedlichen Sendungen beladen werden,
- bei dem beim Beladen des Sendungsmagazins unterschiedliche Sendungskammern nacheinander in eine Aufnahmeposition zur Aufnahme wenigstens einer Sendung und anschließend in eine Lagerposition zum Zwischenlagern der aufgenommenen Sendungen bewegt werden,
- bei dem die Zuordnung der beladenen Sendungskammern zu den jeweils in den Sendungskammern aufgenommenen Sendungen dokumentiert wird,
- bei dem der mit Sendungen beladene Frachtbehälter an ein Fahrzeug zum Zustellen der Sendungen, vorzugsweise nach einem der Ansprüche 7 bis 14, übergeben wird und
- bei dem die mit Sendungen beladenen Sendungskammern nacheinander in eine Abgabeposition zum Abgeben der der jeweiligen Sendungskammer zugeordneten Sendung zum Zwecke der Zustellung bewegt werden.

Zudem ist die zuvor genannte Aufgabe bei einem Fahrzeug nach dem Oberbegriff von Anspruch 7 dadurch gelöst, dass das Sendungsmagazin wenigstens einen Scheibenabschnitt mit einem inneren Ringabschnitt und einen konzentrisch zum inneren Ringabschnitt angeordneten äußeren Ringabschnitt aufweist, dass jeder Ringabschnitt eine Mehrzahl, vorzugsweise in Umfangsrichtung verteilte Sendungskammern aufweist, dass das Sendungsmagazin wenigstens einen Betriebsabschnitt zum Bewegen wenigstens bestimmter Sendungskammern aufweist und dass der Betriebsabschnitt eine Erfassungseinheit zum Erfassen einer Aufnahmeposition wenigstens einer Sendungskammer beim Aufnehmen einer Sendung in der jeweiligen Sendungskammer zum Dokumentieren der Zuordnung der beladenen Sendungskammern zu den jeweils in den Sendungskammern aufgenommenen Sendungen aufweist.

Die Erfindung hat erkannt, dass das Zustellen von Sendungen schneller erfolgen kann, wenn ein Sendungskammern aufweisendes Sendungsmagazin verwendet wird, und zwar auch für den Fall, dass die Sendungen an sehr viele unterschiedliche Adressaten zuzustellen sind. So kann bereits in der Zustellbasis das Sendungsmagazin mit einer ganzen Reihe von Sendungen beladen werden, die jeweils an unterschiedliche Adressaten zugestellt werden müssen. Die Sendungen werden dabei einzeln oder bedarfsweise gruppiert für identische Adressaten in verschiedenen Sendungskammern aufgenommen. Das Beladen der Sendungskammern mit Sendungen erfolgt dabei in wenigstens einer Aufnahmeposition, in die die zu beladenen Sendungskammern zum Zwecke des Beladens bewegt werden. Wenn sich die Sendungskammern in einer Aufnahmeposition befinden, kann den Sendungskammern grundsätzlich jeweils wenigstens eine Sendung von außen zugeführt werden. Bedarfsweise müssen jedoch noch weitere Randbedingungen für das Beladen der Sendungskammern erfüllt sein, als die bloße Positionierung in der Aufnahmestellung.

Da das Beladen der Sendungskammern erfolgt, wenn sich die Sendungskammern in wenigstens einer von bedarfsweise mehreren Aufnahmepositionen befinden, wobei weiter bedarfsweise jede Sendungskammer nur in eine von den mehreren Aufnahmepositionen bewegt werden kann, kann ohne Weiteres festgehalten werden, welche Sendungskammer mit wenigstens einer Sendung beladen worden ist. Wenn zudem bekannt ist, welche wenigstens eine Sendung der wenigstens einen Sendungskammer zugeführt worden ist, kann eine eindeutige Zuordnung von Sendungen und diese aufnehmenden Sendungskammern dokumentiert werden. Zu diesem Zweck kann eine Sendung oder ein entsprechender Code vor dem Aufnehmen der Sendung gescannt werden. Zudem kann das Aufnehmen einer Sendung von einem Sensor, etwa einer Lichtschranke, erfasst werden. Es kann auch wenigstens ein die Sendung tragendes Förderband so gezielt bewegt werden, dass ohne Sensor erfassbar ist, wann die Sendung an das Sendungsmagazin abgegeben worden ist. Wenn ferner eine Information darüber bereitgestellt wird, zu welchem Zeitpunkt sich welche Sendungskammer in der bestimmten Aufnahmeposition befunden hat, ist die Zuordnung der aufgenommenen Sendungen zu den Sendungen aufnehmenden Sendungskammern einfach möglich. Diese Information wird für das spätere Zustellen der Sendungen gespeichert.

Nachdem eine Sendungskammer wenigstens eine Sendung aufgenommen hat, kann die entsprechende Sendungskammer in eine Lagerposition bewegt werden, wobei vorzugsweise gleichzeitig wenigstens eine andere Sendungskammer in die Aufnahmeposition bewegt werden kann. In der Lagerposition kann die Sendungskammer die wenigstens eine Sendung bedarfsweise solange halten bzw. zwischenlagern, bis die Sendung wieder zum Zwecke des Zustellens von dem Sendungsmagazin abgegeben werden muss.

Verfahrensmäßig wird das Sendungsmagazin vor dem Zustellen der Sendungen zuerst mitsamt den in den Sendungskammern aufgenommenen Sendungen an ein Fahrzeug übergeben, das mit dem Sendungsmagazin zu den Zustellorten fährt, an denen die Zustellung der Sendungen erfolgen soll und die beispielsweise mit den Adressaten der Sendungen oder mit Abgabestellen, wie beispielsweise Paketkästen oder Packstationen, übereinstimmen können. An den entsprechenden Zustellorten oder in deren Nähe werden dann jeweils die entsprechenden Sendungen von dem Sendungsmagazin abgegeben. Das Abgeben kann dabei derart erfolgen, dass das Sendungsmagazin selbsttätig die Sendungen abgibt, oder dass das Sendungsmagazin die Sendungen in einer Abgabeposition der entsprechenden Sendungskammern für den Zusteller zum Entnehmen anbietet. Dazu wird wenigstens eine Sendungskammer, in der die wenigstens eine zuzustellende Sendung aufgenommen ist, in eine Abgabeposition bewegt, aus der heraus die wenigstens eine Sendung abgegeben werden kann.

Da die eindeutige Zuordnung der Sendungen zu einer Sendungskammer, die zum Zwecke der Auswertung dokumentiert wird, bekannt ist, kann leicht ermittelt werden, welche Sendungskammer in eine Abgabeposition bewegt werden muss, um eine bestimmte Sendung zum Zwecke der Zustellung aus dem Sendungsmagazin abzugeben. Mithin können die Sendungskammern in der richtigen Reihenfolge in eine Abgabeposition bewegt werden, auch wenn beim Beladen des Sendungsmagazins noch nicht bekannt war, in welcher Reihenfolge die Sendungen zugestellt werden bzw. wenn sich die Reihenfolge der Zustellung nach dem Beladen des Sendungsmagazins mit den Sendungen ändern sollte, etwa weil dies aufgrund der aktuellen Verkehrssituation effektiver erscheint. Im Ergebnis können die Sendungen bedarfsweise in beliebiger Reihenfolge in beliebigen Sendungskammern des Sendungsmagazins aufgenommen werden. Dies vereinfacht und beschleunigt bedarfsweise das Beladen des Sendungsmagazins mit Sendungen. Es ist also unter Umständen möglich, die Sendungen in beliebiger Reihenfolge in Sendungskammern des Sendungsmagazins aufzunehmen und dieselben Sendungen anschließend in einer ebenfalls beliebigen Reihenfolge wieder abzugeben. Dies kann bedeuten, dass die Sendungen unsortiert in dem Sendungsmagazin aufgenommen werden. Die Abgabe der Sendungen kann aber dennoch nach vorgegebenen Kriterien sortiert erfolgen, also in einer Reihenfolge, die durch vorgegebene Kriterien, etwa die Zustelladresse oder dergleichen, bestimmt wird. Verfahrensmäßig wird also für das Zustellen der Sendungen sehr lange ein sehr hohes Maß an Flexibilität erhalten, ohne dass dadurch die vorhergehenden Verfahrensschritte nennenswert aufwendiger wären.

Bei der wenigstens einen Sendung kann es sich um einen Gegenstand in Form eines Stückguts handeln. Insbesondere können die Sendungen Gegenstände des täglichen Bedarfs, wie Verbrauchsmaterialien oder Lebensmittel, sowie technische Gegenstände und Gerätschaften sein. Bevorzugt handelt es sich bei der wenigstens einen Sendung um eine Briefsendung, Paketsendung und/oder Flyer. Dann kommen die Vorteile des Verfahrens in besonderem Maße zum Tragen. Ein Flyer kann dabei bedarfsweise auch eine Broschüre, eine Zeitschrift und/oder ein Prospekt sein, während eine Paketsendung neben einem Paket auch ein Päckchen sein kann. Zudem kann eine Briefsendung neben einem Brief auch eine Postkarte sein.

Besonders bevorzugt handelt es sich bei der wenigstens einen Sendung um eine Paketsendung. Das Abliefern und/oder das Abholen solcher Sendungen ist nämlich mit einem besonderen Aufwand verbunden, etwa weil Pakete nicht in Briefkästen passen und größer und schwerer sind als etwa Briefsendungen.

Zum platzsparenden Aufnehmen und Zwischenlagern von Sendungen bietet es sich gemäß dem Sendungsmagazin konstruktiv an, dass das Sendungsmagazin konzentrische Ringabschnitte aufweist, die wenigstens im Wesentlichen in einer gemeinsamen Ebene angeordnet sind und so einen Scheibenabschnitt des Sendungsmagazins bilden können. Die wenigstens zwei Ringabschnitte eines Scheibenabschnitts unterteilen sich dementsprechend wenigstens in einen inneren Ringabschnitt und einen äußeren Ringabschnitt. Dazwischen kann bedarfsweise noch wenigstens ein weiterer Ringabschnitt vorgesehen sein, wenn dies beispielsweise aus Platzgründen und konstruktiven Gesichtspunkten zweckmäßig sein sollte. Das erfindungsgemäße Verfahren ist aber nicht zwingend auf die Verwendung solcher Sendungsmagazine beschränkt.

Die Ringabschnitte können jeweils eine Reihe von Sendungskammern aufweisen, die in wenigstens eine Aufnahmeposition und wenigstens eine Abgabeposition bewegt werden können. So kann entsprechend eine größere Anzahl von Sendungen in dem Sendungsmagazin aufgenommen werden. Um die Sendungskammern einfach, schnell und zuverlässig in die entsprechende Aufnahmeposition und/oder Abgabeposition bewegen zu können, bietet es sich besonders an, wenn die Sendungskammern wenigstens teilweise über die Umfänge der Ringabschnitte verteilt angeordnet sind. Die Sendungskammern können dann beispielweise durch ein Schwenken der Sendungskammern wenigstens eines Ringabschnitts um eine zentrale Achse bzw. durch Drehen des entsprechenden Ringabschnitts um die zentrale Achse in die Aufnahmeposition, die Abgabeposition und/oder die Lagerposition bewegt werden. Dies führt letztlich zu einer verfahrensmäßigen und konstruktiven Vereinfachung.

Eine Vereinfachung und Beschleunigung der Zustellung kann zudem erreicht werden, wenn die Beladung des Sendungsmagazins unabhängig von dem Zustellfahrzeug erfolgt. Das Zustellfahrzeug kann beispielsweise noch für das Zustellen von Sendungen genutzt werden, während bereits später zuzustellende Sendungen in einem Sendungsmagazin aufgenommen werden. Somit muss auch das Bestücken des Sendungsmagazins nicht unbedingt durch den Zusteller oder den Fahrer selbst erfolgen. Der Zusteller muss so das Zustellen von Sendungen nur kurz unterbrechen und nach dem Zustellen der Sendungen eines Sendungsmagazins das dann bedarfsweise leere Sendungsmagazin etwa an der Zustellbasis gegen ein beladenes Sendungsmagazin austauschen. Dazu ist das Fahrzeug zum Zustellen der Sendungen lösbar mit wenigstens einem Sendungsmagazin koppelbar. Zur Kopplung weist das Fahrzeug bedarfsweise eine Ladungsaufnahme, ein Chassis oder dergleichen auf.

Die Kopplung kann dabei auf unterschiedliche Weisen erfolgen, wobei es bevorzugt ist, wenn eine Verbindung zwischen dem Fahrzeug und dem Sendungsmagazin lösbar gebildet werden kann. So wird verhindert, dass sich das Sendungsmagazin vom Fahrzeug löst oder während der Fahrt verloren geht. Bedarfsweise kann zu diesem Zweck eine formschlüssige Verbindung zwischen dem Fahrzeug und dem Sendungsmagazin vorgesehen sein. Das Sendungsmagazin kann beispielsweise in einer Aufnahme des Fahrzeugs aufgenommen werden, so dass das Sendungsmagazin nicht vom Fahrzeug rutschen kann. Es kann aber auch eine Sicherung des Sendungsmagazins auf dem Fahrzeug durch Bolzen oder dergleichen vorgesehen sein. Es kommen auch kraftschlüssige Verbindungen wie Schraubverbindungen in Frage. Die Verbindungen sollten jedoch einfach und schnell geschlossen und wieder gelöst werden können, um einen schnellen und unkomplizierten Austausch von Sendungsmagazinen eines Fahrzeugs zu gewährleisten.

Das Verfahren und das Fahrzeug jeweils der vorgenannten Art werden nachfolgend der besseren Verständlichkeit halber und zur Vermeidung unnötiger Wiederholungen zusammen beschrieben, ohne jeweils im Einzelnen zwischen dem Verfahren und dem Fahrzeug zu unterscheiden. Für den Fachmann ergibt sich jedoch anhand des Kontextes ohne Weiteres, welche Merkmale für das Verfahren bzw. das Fahrzeug bevorzugt sind.

Bei einer ersten bevorzugten Ausgestaltung des Verfahrens werden die Sendungskammern durch eine Drehung wenigstens eines Teils des Sendungsmagazins bewegt. Dies ist einfach, genau und zuverlässig. Dies gilt umso mehr, wenn wenigstens ein Sendungskammern aufweisender Ringabschnitt gedreht wird, und zwar bedarfsweise um eine zentrale Achse. Die Drehung kann alternativ oder zusätzlich so erfolgen, dass wenigstens eine Sendungskammer von der Aufnahmeposition in die Lagerposition und/oder von der Lagerposition in die Abgabeposition bewegt wird. Weitere Sendungskammern des Sendungsmagazins müssen sich dabei zwar nicht auch bewegen, es ist jedoch bevorzugt, wenn sich dabei eine andere Sendungskammer in die Aufnahmeposition und/oder aus der Abgabeposition bewegt. Wenn die Sendungskammern über den Umfang des Ringabschnitts gesehen nebeneinander vorgesehen sind ist die gleichzeitige Bewegung mehrerer Sendungskammern einfach, schnell und genau möglich.

Um zu verhindern, dass eine Sendung versehentlich aus der zugehörigen Sendungskammer gelangt, etwa während des Bewegens mehrerer Sendungskammern, insbesondere aus einer Sendungskammer herausrutscht, kann die wenigstens eine Sendungskammer zum Lagern der Sendung in einer Lagerposition geschlossen werden. Damit das Aufnehmen und/oder Abgeben trotzdem oder überhaupt gezielt und zuverlässig erfolgen kann, kann alternativ oder zusätzlich vorgesehen sein, dass die wenigstens eine Sendungskammer zum Aufnehmen der Sendung in der Aufnahmeposition und zum Abgeben der Sendung in der Abgabeposition geöffnet wird. Das Öffnen und Schließen wenigstens einer Sendungskammer kann grundsätzlich auf unterschiedliche Arten erfolgen. Es kann etwa der wenigstens einen Sendungskammer eine Verschlusseinrichtung zum Verschließen einer Öffnung, etwa umfassend eine Klappe oder einen Schieber, zugeordnet sein, die fest mit der Sendungskammer verbunden ist und die sich daher mit der wenigstens einen Sendungskammer bewegt. Es kann aber auch eine Verschlusseinrichtung vorgesehen sein, die die Öffnung der wenigstens einen Sendungskammer nur unter bestimmten Bedingungen freigibt, ansonsten aber verschließt. Dies kann den konstruktiven Aufwand erheblich mindern, auch wenn dies die Flexibilität und die Zuverlässigkeit beeinträchtigen kann. Die Verschlusseinrichtung kann sich dann mit der Sendungskammer bewegen oder ortsfest angeordnet sein. Letzteres ist einfacher, kann aber funktionale Beeinträchtigungen nach sich ziehen. Ein Bewegen der Verschlusseinrichtung kann ferner gleichförmig mit der wenigstens einen Sendungskammer oder wenigstens teilweise unabhängig von der Sendungskammer folgen. So kann gewährleistet werden, dass die Sendungen die Sendungskammern nicht versehentlich verlassen. Wenn die Verschlusseinrichtung nicht fest mit der wenigstens einen Sendungskammer verbunden ist, kann wenigstens eine Öffnung eines Gehäuses des Ringabschnitts zum Aufnehmen der Sendung in der Aufnahmeposition geöffnet, zum Abgeben der Sendung in der Abgabeposition geöffnet und/oder zum Lagern der Sendung in einer Lagerposition geschlossen werden. Dies kann durch gezieltes Öffnen und Schließen des Ringabschnitts erfolgen, es kann aber auch wenigstens eine Öffnung des Ringabschnitts in bestimmten Situationen in Überdeckung mit der wenigstens einen Sendungskammer gebracht werden, um ein Aufnehmen oder Abgeben einer Sendung zu bewirken. In anderen Situationen kann eine Überdeckung der Öffnung mit der Sendungskammer vermieden werden, um ein versehentliches Aufnehmen und/oder Abgeben einer Sendung zu verhindern.

Um sehr viele Sendungen auf engstem Raum in dem Sendungsmagazin aufnehmen zu können, ohne dessen Funktionalität zu stark zu beeinträchtigen, können wenigstens zwei konzentrische Ringabschnitte jeweils mit Sendungskammern vorgesehen werden, wobei der innere konzentrische Ringabschnitt zentral im äußeren konzentrischen Ringabschnitt aufgenommen ist. Dann bietet es sich an, wenn der äußere Ringabschnitt wenigstens nicht durchgängig über seinen Umfang mit Sendung belegte Sendungskammern aufweist. Dann können nämlich nur bedingt Sendungen von dem inneren Ringabschnitt aufgenommen und/oder abgegeben werden. Wenn der äußere Ringabschnitt jedoch wenigstens eine freie Sendungskammer aufweist oder bereichsweise über seinen Umfang keine Sendungskammer aufweist, kann diese Sendungskammer bzw. dieser freie Bereich für das Beladen und/oder Entladen von Sendungskammern des inneren Ringabschnitts genutzt werden. Die Sendungen zum Beladen der Sendungskammern und/oder zum Abgeben der Sendung aus der Sendungskammer eines inneren Ringabschnitts können dann sehr einfach und zuverlässig durch wenigstens einen äußeren konzentrisch angeordneten Ringabschnitt hindurch bewegt werden. Dabei kann der äußere Ringabschnitt in anderen Bereichen seines Umfangs aber gleichwohl Sendungskammern zum Aufnehmen von Sendungen aufweisen, um so die Kapazität des Sendungsmagazins zu erhöhen.

Das Bestücken des Sendungsmagazins mit Sendungen kann bedarfsweise dadurch vereinfacht werden, dass die Sendungskammern unter Ausnutzung der Schwerkraft mit Sendungen beladen werden und/oder bei dem die Sendungen aus den Sendungskammern unter Ausnutzung der Schwerkraft abgegeben werden. Die Sendungskammern oder das Sendungsmagazin können so angeordnet werden, dass die Öffnungen der Sendungskammern in der Aufnahmeposition zumindest teilweise nach oben weisen. Sendungen können dann in die entsprechenden Sendungskammern fallen oder rutschen, ohne dass es eines weiteren Antriebs hierfür bedarf. Wenn die Öffnungen der Sendungskammern in der Abgabeposition wenigstens teilweise nach unten weisen, können die Sendungen folglich von selbst aus dem Sendungsmagazin fallen und/oder rutschen. Ganz grundsätzlich kann es die Transportprozesse der Sendungen innerhalb des Sendungsmagazins begünstigen, wenn das Sendungsmagazin in einer Ausrichtung mit Sendungen beladen wird, während das Abgeben der Sendungen in einer anderen Ausrichtung des Sendungsmagazins erfolgt. Es ist also bedarfsweise möglich, das Sendungsmagazin selbst zwischen einer Beladestellung zum Beladen des Sendungsmagazins mit Sendungen und einer Entladestellung zum Entladen von Sendungen zu verstellen, vorzugsweise zu drehen, und zwar insbesondere um eine Längsachse des Sendungsmagazins. Es können alternativ oder zusätzlich aber auch nur wenigstens ein Ringabschnitt, bestimmte Ringabschnitte oder alle Ringabschnitte gedreht werden, um das Sendungsmagazin von der Beladestellung in die Entladestellung und zurück zu verstellen.

Damit das Fahrzeug viele Sendungen zum Zwecke der Zustellung mitführen kann, bietet es sich an, mehrere Scheibenabschnitte eines Sendungsmagazins mit Sendungen zu bestücken, wobei jeder Scheibenabschnitt Sendungskammern zur Aufnahme von Sendungen aufweist. Damit die Scheibenabschnitte ihrerseits gut genutzt werden können, kann jeder Scheibenabschnitt wenigstens einen Ringabschnitt aufweisen, der konzentrisch zu den Ringabschnitten der anderen Scheibenabschnitte vorgesehen ist. Jeder der Ringabschnitte weist dann zudem vorzugsweise eine Reihe von Sendungskammern auf, die über den Umfang des jeweiligen Ringabschnitts verteilt sein können. Noch effizienter ist es jedoch, wenn die Scheibenabschnitte wenigstens teilweise wenigstens zwei konzentrisch zueinander angeordnete Ringabschnitte aufweisen. Von den Ringabschnitten eines Scheibenabschnitts ist dann insbesondere ein Ringabschnitt ein innerer, Ringabschnitt der zentral wenigstens teilweise in einem äußeren Ringabschnitt aufgenommen ist. Bedarfsweise sind dazwischen noch weitere Ringabschnitte vorgesehen. Jeder Ringabschnitt ist dabei vorzugsweise in dem nächsten äußeren Ringabschnitt aufgenommen. Zudem kann jeder Ringabschnitt bevorzugt eine Reihe von Sendungskammern, insbesondere verteilt über den jeweiligen Umfang, aufweisen. So werden letztlich viele Sendungskammern im Sendungsmagazin für viele Sendungen bereitgestellt, die zudem einfach beladen und entladen werden können.

Um in den Sendungskammern mehrerer konzentrischer Ringabschnitte Sendungen aufzunehmen und/oder Sendungen aus den Sendungskammern der Ringabschnitte abzugeben können vorzugsweise wenigstens ein innerer Ringabschnitt und ein konzentrisch zum inneren Ringabschnitt angeordneter äußerer Ringabschnitt unabhängig voneinander um ihre Längsachse gedreht werden, und zwar abhängig davon, ob eine Sendung aufgenommen bzw. welche Sendung abgegeben werden soll. Zum Aufnehmen und Abgegeben einer Sendung kann der äußere konzentrische Ringabschnitt in eine Position gedreht werden, in der Sendungen durch den äußeren konzentrischen Ringabschnitt hindurch gelangen können, um in einer Sendungskammer des inneren Ringabschnitts aufgenommen zu werden und/oder von einer Sendungskammer des inneren Ringabschnitts abgegeben zu werden.

Verfahrensmäßig kann auch dem Umstand Rechnung getragen werden, dass wenigstens eine bereits von dem Sendungsmagazin abgegebene Sendung nicht wie beabsichtigt zugestellt werden kann. Die entsprechende Sendung muss dann weiter mit dem Fahrzeug mitgenommen werden, damit die Sendung zu einem späteren Zeitpunkt zugestellt oder an einem Abholort zur Abholung etwa durch den Adressaten bereitgehalten werden kann. Für entsprechende Sendungen muss auf dem Fahrzeug aber kein gesonderter Platz reserviert werden. Die wenigstens eine nicht zustellbare bereits vom Sendungsmagazin abgegebene Sendung kann, etwa nach einem vergeblichen Zustellversuch, wieder von dem Sendungsmagazin aufgenommen werden. Es wird wieder eine Sendungskammer in eine Aufnahmeposition gebracht, in der die Sendungskammer die nicht zugestellte Sendung aufnimmt. Das erforderliche Handling des Sendungsmagazins und der Sendung kann durch den Zusteller ohne Weiteres vor Ort vorgenommen werden. Beispielsweise kann die wenigstens eine Sendung in einen Ringabschnitt gelegt und, vorzugsweise nach Schließen des Ringabschnitts und/oder der jeweiligen Sendungskammer, der Ringabschnitt gedreht werden. Die Sendungskammer, welche die Sendung aufgenommen hat, wird dabei in eine Lagerposition bewegt. Zurück an der Zustellbasis kann dann die entsprechende Sendung bedarfsweise erneut aus dem Sendungsmagazin abgegeben werden. Alternativ kann die Sendung aber auch im Sendungsmagazin verbleiben, um bei der nächsten Zustellfahrt die Zustellung erneut zu versuchen.

Die Effizienz der Zustellung der Sendungen kann weiter erhöht werden, wenn die Sendungen, vorzugsweise automatisch, nacheinander in Abhängigkeit von der vom Fahrzeug zurückgelegten Route aus dem Sendungsmagazin abgegeben werden. Beim Beladen des Sendungsmagazins wird dokumentiert, welche Sendungen aufgenommen sind. Aus dieser Information kann ermittelt werden, welche Orte angefahren werden müssen, um die Sendungen zuzustellen, was wiederum dazu genutzt werden kann, um eine optimale Zustellroute zu berechnen. Dies kann beispielsweise die kürzeste, die schnellste oder die ökonomischste Route sein. Wenn die Route festgelegt ist, ist infolge der Zuordnung der Sendungen zu den Sendungskammern, in denen die Sendungen aufgenommen sind, klar, welche Sendungskammern nacheinander in die Abgabeposition bewegt werden müssen, um die Sendungen in der vorbestimmten Reihenfolge zustellen zu können.

Das Sendungsmagazin kann einfach und zuverlässig Sendungen aufnehmen und Sendungen wieder abgeben, wenn die Sendungskammern und/oder die Ringabschnitte jeweils eine nach außen weisende und verschließbare Öffnung aufweisen. Die Sendungskammern können dabei beispielsweise selbst Verschlusseinrichtungen aufweisen oder es können Verschlusseinrichtungen vorgesehen sein, die nicht fest mit den Sendungskammern verbunden sind aber mit den Sendungskammern zumindest in bestimmten Positionen der Sendungskammern zusammenwirken.

Alternativ oder zusätzlich kann das Sendungsmagazin wenigstens zwei Scheibenabschnitte aufweisen, um darin eine Vielzahl von Sendungen aufzunehmen. Um gleichzeitig eine kompakte und leicht zu handhabende Form des Sendungsmagazins zu erhalten, sind die Scheibenabschnitte vorzugsweise axial nebeneinander angeordnet. Alternativ oder zusätzlich kann, insbesondere neben wenigstens einem Scheibenabschnitt, der Betriebsabschnitt vorgesehen sein. Der Betriebsabschnitt kann dabei Mittel zum Bewegen der Sendungskammern aufweisen. Beispielsweise können über den Betriebsabschnitt einzelne Ringabschnitte bewegt werden. Der Betriebsabschnitt kann alternativ oder zusätzlich auch Mittel zum Verschließen wenigstens bestimmter Sendungskammern, insbesondere von wenigstens bestimmten Abschnitten einzelner Ringabschnitte aufweisen. Denkbar ist auch, dass in dem Betriebsabschnitt Mittel vorhanden sind, die erfassen, in welcher Stellung sich einzelne oder gar alle Sendungskammern befinden. Dies dient dann beispielsweise der Zuordnung von Sendungen und Sendungskammern beim Beladen des Sendungsmagazins und/oder der gezielten Abgabe der Sendungen.

In diesem Zusammenhang bietet es sich weiter an, wenn das Sendungsmagazin modular aufgebaut ist bzw. einen modularen Aufbau darstellt. Dann kann das Sendungsmagazin je nach Bedarf mit mehr oder weniger Scheibenabschnitten versehen sein. Um eine hohe Flexibilität für die Nutzung des Sendungsmagazins bereitstellen zu können, können einzelne Scheibenabschnitte eines Sendungsmagazins einfach und schnell ergänzt und/oder entfernt werden. Ein Sendungsmagazin kann also für aufeinanderfolgende Verwendungen bzw. Zustellungen mit unterschiedlichen Anzahlen von Scheibenabschnitten bestückt werden. So kann eine Anpassung des Sendungsmagazins an das jeweilige Sendungsaufkommen und/oder die Größe bzw. Länge des Zustellfahrzeugs erfolgen. Zudem werden die Menge und der Lagerhaltungsaufwand der erforderlichen Sendungsmagazine verringert.

Der Betriebsabschnitt kann beispielsweise wenigstens eine Antriebseinheit zum Bewegen wenigstens bestimmter Sendungskammern, insbesondere bestimmter Ringabschnitte, und/oder zum Verschließen wenigstens bestimmter Sendungskammern, insbesondere bestimmter Ringabschnitte, aufweisen. Dann können die entsprechenden Sendungskammern mehr oder weniger unabhängig vom Fahrzeug bewegt werden. Der Betriebsabschnitt weist eine Erfassungseinheit zum Erfassen einer Aufnahmeposition wenigstens einer Sendungskammer beim Aufnehmen einer Sendung in der jeweiligen Sendungskammer auf. Auch dies kann dann unabhängig von dem Fahrzeug als solchem erfolgen. Auch kann die Bewegung von bestimmten Sendungskammern unabhängig vom Fahrzeug gesteuert werden, wenn der Betriebsabschnitt wenigstens eine Steuereinheit aufweist. Die Steuerung der Bewegung einzelner Sendungskammern kann so erfolgen, dass die Bewegung der Sendungskammern in eine Aufnahmeposition, eine Abgabeposition und/oder eine Lagerposition nach wenigstens teilweise vorbestimmten Kriterien gesteuert wird.

Damit die gewünschten Sendungen schnellerer und flexibler aus einem Sendungsmagazin mit mehreren Scheibenabschnitten entnommen werden können, kann es zweckmäßig sein, wenn die Ringabschnitte unterschiedlicher Scheibenabschnitte wenigstens teilweise unabhängig voneinander bewegt und/oder angetrieben werden können. Allerdings kann es zur Verringerung des apparativen und konstruktiven Aufwands auch bevorzugt sein, wenn wenigstens einige Ringabschnitte unterschiedlicher Scheibenabschnitte gleichzeitig bewegt und/oder angetrieben werden. In einem einfachen Fall können beispielsweise innere Ringabschnitte unterschiedlicher, insbesondere benachbarter, Scheibenabschnitte gemeinsam bewegt und/oder angetrieben werden. Alternativ oder zusätzlich können entsprechend äußere Ringabschnitte unterschiedlicher, insbesondere benachbarter, Scheibenabschnitte gemeinsam bewegt und/oder angetrieben werden. Noch einfacher kann es in diesem Zusammenhang sein, wenn alle inneren Ringabschnitte der, bedarfsweise modular vorgesehenen, Scheibenabschnitte gemeinsam bewegt und/oder angetrieben werden. Analog gilt dasselbe, wenn alle äußeren Ringabschnitte der, bedarfsweise modular vorgesehenen, Scheibenabschnitte gemeinsam bewegt und/oder angetrieben werden.

Um die Sendungen sicher und zuverlässig in den Sendungskammern aufnehmen zu können und eine versehentliche Abgabe der Sendungen aus einzelnen Sendungskammern zu vermeiden, kann wenigstens ein Ringabschnitt und/oder wenigstens eine Sendungskammer wenigstens eine Verschlusseinrichtung zum Verschließen einer Öffnung zum Aufnehmen und/oder Abgeben von Sendungen aufweisen. Die Verschlusseinrichtungen können also dauerhaft bestimmten Sendungskammern zugeordnet sein, die Verschlusseinrichtungen können aber auch dem Sendungsmagazin, den Ringabschnitten und/oder Gehäuseteilen der Ringabschnitte zugeordnet sein, so dass die Verschlusseinrichtungen in unterschiedlichen Stellungen des Sendungsmagazins unterschiedlichen Sendungskammern zugeordnet sein können. Letzteres kann zu einer einfacheren konstruktiven Ausgestaltung des Sendungsmagazins beitragen aber eventuell zu einem komplizierteren Betrieb des Sendungsmagazins führen.

Im Falle von mehreren Scheibenabschnitten können die Sendungskammern und/oder die Ringabschnitte jeweils wenigstens teilweise unabhängig voneinander verschlossen werden, um ein hohes Maß an Flexibilität für das Entladen der Sendungen bereitstellen zu können. Um den konstruktiven und apparativen Aufwand jedoch zu begrenzen, bietet es sich gleichwohl an, wenn wenigstens einige Sendungskammern und/oder Ringabschnitte unterschiedlicher Scheibenabschnitte gleichzeitig verschlossen werden. In einem einfachen Fall können beispielsweise innere Ringabschnitte unterschiedlicher, insbesondere benachbarter, Scheibenabschnitte bzw. deren Sendungskammern gemeinsam verschlossen werden. Alternativ oder zusätzlich können entsprechend äußere Ringabschnitte unterschiedlicher, insbesondere benachbarter, Scheibenabschnitte bzw. deren Sendungskammern gemeinsam verschlossen werden. Noch einfacher kann es in diesem Zusammenhang sein, wenn alle inneren Ringabschnitte der, bedarfsweise modular vorgesehenen, Scheibenabschnitte bzw. deren Sendungskammern gemeinsam verschlossen werden. Analog gilt dasselbe, wenn alle äußeren Ringabschnitte der, bedarfsweise modular vorgesehenen, Scheibenabschnitte bzw. deren Sendungskammern gemeinsam verschlossen werden. Ganz grundsätzlich kann durch ein gemeinsames Verschließen die Anzahl benötigter Verschlusseinrichtungen verringert werden, da das gemeinsame Verschließen beispielweise unterschiedlicher Ringabschnitte bedarfsweise mit einer einzigen Verschlusseinrichtung erfolgen kann. Alternativ oder zusätzlich können einzelne oder alle inneren Ringabschnitte in einem gemeinsamen rohrartigen Gehäuse aufgenommen sein, das sich für die einzelnen oder alle Ringabschnitte mit bedarfsweise einer einzigen Verschlusseinrichtung verschließen lässt. Dementsprechend können alternativ oder zusätzlich einzelne oder alle äußeren Ringabschnitte in einem gemeinsamen rohrartigen Gehäuse aufgenommen sein, das sich für die einzelnen oder alle Ringabschnitte mit bedarfsweise einer einzigen Verschlusseinrichtung verschließen lässt. Grundsätzlich kann es sich für eine einfacher und zuverlässige Steuerung des Sendungsmagazins auch anbieten, wenn die gemeinsam bewegten Ringabschnitte auch gemeinsam mit bedarfsweise einer einzigen Verschlusseinrichtung verschlossen werden.

Das Fahrzeug kann ferner eine Antriebseinrichtung zum Bewegen wenigstens bestimmter Sendungskammern aufweisen. Dann müssen jedenfalls nicht alle Sendungskammern von dem Sendungsmagazin selbst bewegt werden, was die apparative Ausgestaltung des Sendungsmagazins vereinfachen kann. Insbesondere bietet es sich an, ganze Ringabschnitte und/oder Scheibenabschnitte über die Antriebseinrichtung des Fahrzeugs zu bewegen. Auch das Verschließen wenigstens bestimmter Sendungskammern oder Ringabschnitte kann bedarfsweise mittels der Antriebseinrichtung des Fahrzeugs erfolgen.

Um das Sendungsmagazin zweckmäßig auf dem Fahrzeug halten und betreiben zu können, kann das Fahrzeug einen in eine axiale Aussparung des Sendungsmagazins eingreifenden Stababschnitt aufweisen. Das Sendungsmagazin kann dann auf diesen Stababschnitt aufgeschoben werden, der sich in Längsrichtung des Fahrzeugs erstrecken kann. Dann ist es zum Aufschieben des Sendungsmagazins weiter bevorzugt, wenn der Stababschnitt ein der Fahrzeugrückseite zugeordnetes freies Ende aufweist. Der Stababschnitt kann bedarfsweise Mittel zum Antrieb wenigstens eines inneren Ringabschnitts des Sendungsmagazins und/oder Mittel zum Erfassen der Position von wenigstens einer Sendungskammer und/oder wenigstens eines inneren Ringabschnitts des Sendungsmagazins aufweisen. Dabei reicht es gegebenenfalls aus, wenn der Stababschnitt mit bestimmten Einrichtungen des Sendungsmagazins verbunden bzw. gekoppelt ist. Die Antriebskraft und/oder Erfassungsmittel können dann beispielweise durch andere Teile des Fahrzeugs bereitgestellt werden, die dann vorzugsweise mit dem Stababschnitt verbunden sind.

Das Fahrzeug und/oder das Sendungsmagazin können alternativ oder zusätzlich eine Verarbeitungseinrichtung aufweisen, mittels derer anhand von Positionsinformationen, insbesondere GNSS (Global Navigation Satellite System)-Informationen, wie etwa Global Positioning (GPS)-Informationen, GLONASS-Informationen, Galileo-Informationen, Beidou-Informationen und/oder QZSS-Informationen, Zustellinformation ermittelt werden. Zustellinformationen können dabei festlegen, welche Sendung als nächstes zugestellt werden soll, und zum Antrieb bzw. zur Steuerung des Sendungsmagazins dahingehend genutzt werden, dass die der entsprechenden Sendung zugeordnete Sendungskammer in eine Abgabeposition zur Abgabe und Zustellung der entsprechenden Sendung bewegt wird, und zwar bedarfsweise von einer Antriebseinheit, die mit der Verarbeitungseinrichtung gekoppelt sein kann.

Vorzugsweise weisen das Fahrzeug und das Sendungsmagazin Mittel zur bidirektionalen Datenübertragung auf, um Daten zwischen dem Fahrzeug und dem Sendungsmagazin austauschen zu können. Die entsprechenden Mittel zur bidirektionalen Datenübertragung können dann der Einfachheit halber etwa beim Übergeben des Sendungsmagazins an das Fahrzeug, insbesondere zwangsweise, miteinander verbunden werden. Alternativ oder zusätzlich kann die Verarbeitungseinrichtung einen Datenspeicher zur Speicherung von Daten aufweisen, auf dem beispielsweise relevante Frachtdaten zu den Sendungen oder andere Sendungsdaten bereitgehalten werden. Dabei ist es besonders bevorzugt, wenn der Datenspeicher als Teil des Sendungsmagazins ausgebildet ist. Die Daten sind auf diese Weise mit den Sendungen des Sendungsmagazins gekoppelt, also sozusagen "verheiratet". Der Datenspeicher oder ein weiterer Datenspeicher kann aber grundsätzlich auch Teil des Fahrzeugs sein.

Nachfolgend wird die Erfindung anhand einer lediglich ein Ausführungsbeispiel darstellenden Zeichnung näher erläutert. In der Zeichnung zeigt
- Fig. 1: ein Sendungsmagazin in einer seitlichen Schnittdarstellung quer zur Längsachse des Sendungsmagazins,
- Fig. 2: das Sendungsmagazin aus Fig. 1 in einer perspektivischen Ansicht,
- Fig. 3: das Sendungsmagazin aus Fig. 1 in einer Seitenansicht quer zur Längserstreckung,
- Fig. 4: das Koppeln des Sendungsmagazins aus Fig. 1 mit einem Zustellfahrzeug zum Zwecke der Zustellung der Sendungen in einer schematischen Darstellung und
- Fig. 5: ein erfindungsgemäßes Verfahren in einer schematischen Fließbilddarstellung.

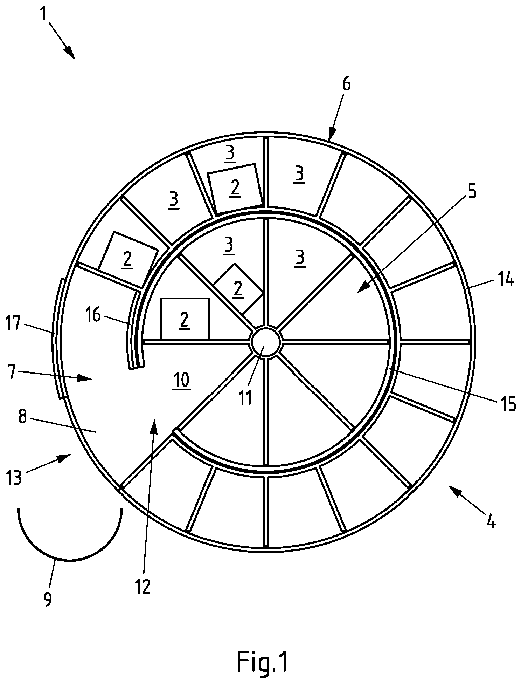

In der Fig. 1 ist ein Sendungsmagazin 1 dargestellt, in dem eine Reihe von Sendungen 2 aufgenommen sind. Dazu weist das Sendungsmagazin 1 Sendungskammern 3 auf, in die die Sendungen 2 eingebracht werden können. Beim dargestellten und insoweit bevorzugten Sendungsmagazin 1 ist ein Scheibenabschnitt 4 mit zwei konzentrischen Ringabschnitten 5,6 vorgesehen. Der innere Ringabschnitt 5 ist dabei in dem äußeren Ringabschnitt 6 aufgenommen. Zudem sind in beiden Ringabschnitten 5,6 verteilt über den Umfang Sendungskammern 3 nebeneinander angeordnet. Während im inneren Ringabschnitt 5 über den gesamten Umfang Sendungskammern 3 vorgesehen sind, weist der äußere Ringabschnitt 6 nur abschnittsweise, wenn auch über den überwiegenden Teil des Umfangs, Sendungskammern 3 auf. Es ist jedoch auch ein Abschnitt 7 ohne Sendungskammern 3 vorgesehen. Dieser Abschnitt 7 kann genutzt werden, um durch diesen Abschnitt 7 hindurch Sendungen 2 in den inneren Ringabschnitt 5 einzubringen oder aus dem inneren Ringanschnitt 5 Sendungen 2 abzugeben. Die Sendungen 2 rutschen, wenn die entsprechende Sendungskammer 3 in die Abgabeposition 8 bewegt wird, durch den äußeren Ringabschnitt 6 in eine Ausgaberinne 9 von wo die Sendungen 2 vom Zusteller entnommen werden können. Die Sendungen 2 können bedarfsweise entlang der Ausgaberinne 9 in Richtung des hinteren Endes des Sendungsmagazins 1 rutschen, wo sie dann einfacher vom Zusteller entgegengenommen werden können. Die Sendungen 2 können bedarfsweise aber auch von der Seite des Sendungsmagazins 1 entnommen werden. Die in den Sendungskammern 3 des äußeren konzentrischen Ringabschnitts 6 aufgenommenen Sendungen 2 können unabhängig von der Ausrichtung des inneren Ringabschnitts 5 abgegeben werden. Die jeweilige Sendungskammer 3 des äußeren Ringabschnitts 6 wird dazu in die Abgabeposition 10 bewegt, in der die Sendung 2 beim dargestellten und insoweit bevorzugten Sendungsmagazin 1 aus dem äußeren Ringabschnitt 6 herausrutscht. Das Abgeben von Sendungen 2 erfolgt also bei dem dargestellten und insoweit bevorzugten Sendungsmagazin 1 unter Ausnutzung der Schwerkraft.

Um die Sendungskammern 3 in die Abgabeposition 8,10 zu bewegen, wird je nach den Sendungskammern 3 des Scheibenabschnitts 4 wenigstens ein Ringabschnitt 5,6 um eine zentrale Achse 11 des Scheibenabschnitts 4 gedreht. Die Drehung der Ringabschnitte 5,6 kann beim dargestellten und insoweit bevorzugten Sendungsmagazin 1 wahlweise in entgegengesetzte Richtungen erfolgen. Es bewegen sich also alle Sendungskammern 3 eines Ringabschnitts 5,6 oder es bewegt sich keine der Sendungskammern 3 eines Ringabschnitts 5,6. Um eine Sendung 2 aus dem inneren Ringabschnitt 5 abgeben zu können, muss der äußere Ringabschnitt 6 in eine Grundstellung gebracht werden, in der der äußere Ringabschnitt 6 das Hindurchtreten von Sendungen 2 aus dem inneren Ringabschnitt 5 durch den äußeren Ringabschnitt 6 erlaubt. Diese Grundstellung ist in der Fig. 1 dargestellt.

Bei dem dargestellten und insoweit bevorzugten Sendungsmagazin 1 sind die Sendungskammern 3 offen. Das birgt jedoch grundsätzlich die Gefahr, dass Sendungen 2 beim Drehen der Ringabschnitte 5,6 versehentlich aus den Sendungskammern 3 herausrutschen. Dies gilt insbesondere deshalb, weil die Sendungen 2 vorzugsweise nicht in einer bestimmten Reihenfolge oder nach einem bestimmten Schema in dem Sendungsmagazin 1 aufgenommen worden sind oder weil die Reihenfolge der Abgabe der Sendungen 2 auch nach deren Aufnahme im Sendungsmagazin 1 noch geändert werden kann. Wenn Sendungen 2 aus bestimmten Sendungskammern 3 noch nicht abgegeben werden sollen, kann durch Verschließen einer äußeren Öffnung 12,13 des jeweiligen Ringabschnitts 5,6 bzw. des Gehäuses 14,15 des entsprechenden Ringabschnitts 5,6 eine versehentliche Abgabe der Sendungen 2 vermieden werden.

Die entsprechenden Verschlusseinrichtungen 16,17 sind hier in Form von Schiebern dargestellt. Es wären aber beispielsweise auch Klappen möglich. Der Antrieb der Verschlusseinrichtungen 16,17 ist der besseren Übersichtlichkeit halber nicht dargestellt. Dem Fachmann sind aber geeignete Antriebe, etwa elektromagnetische Antriebe, bekannt. Wenn die Verschlusseinrichtungen 16,17 die Öffnungen 12,13 der Ringabschnitte 5,6 verschließen, können die Sendungskammern 3 gedreht werden, ohne dass eine Sendung 2 aus seiner Sendungskammer 3 herausrutscht. Mithin verschließen die Verschlusseinrichtungen 16,17 auch bedarfsweise eine Öffnung wenigstens einer Sendungskammer 3. Alternativ wäre es natürlich auch möglich, die Ausrichtung des Sendungsmagazins 1 zu ändern, insbesondere das Sendungsmagazin 1 insgesamt zu drehen, so dass die Öffnungen 12,13 der Ringabschnitte 5,6 nach oben weisen. Dann verhindert die Schwerkraft, dass eine Sendung 2 beim Drehen der Sendungskammern 3 um die zentrale Längsachse 11 aus einer Sendungskammer 3 herausrutscht. Zur Abgabe bestimmter Sendungen 2 kann das Sendungsmagazin 1 dann wieder, etwa in die Ausrichtung gemäß Fig. 1, gedreht werden, um die Schwerkraft zur Abgabe der Sendungen 2 zu nutzen.

Die Schwerkraft wird auch beim Aufnehmen von Sendungen 2 in die Sendungskammern 3 ausgenutzt. Dazu werden die Sendungskammern 3 in eine Aufnahmeposition 8,10 bewegt, die beim dargestellten und insoweit bevorzugten Sendungsmagazin 1 grundsätzlich den Abgabepositionen 8,10 entsprechen. Bei der Aufnahme der Sendungen 2 ist das Sendungsmagazin 1 jedoch selbst anders als in der Fig. 1 dargestellt angeordnet, nämlich mit den Aufnahmepositionen 8,10 nach oben. Die Sendungen 2 rutschen dann von ganz alleine in die Sendungskammern 3 hinein. Da in einer bestimmten Stellung des Scheibenabschnitts 4 immer eine Sendungskammer 3 eine Sendung 2 aufnehmen kann, kann beim Beladen des Sendungsmagazins 1 festgehalten werden, welche Sendung 2 in welcher Sendungskammer 3 aufgenommen ist, wenn die zugeführten Sendungen 2 der Reihe nach bekannt sind, was etwa durch Scannen eines Codes der Sendungen 2 vor dem Aufnehmen in einer Sendungskammer 3 des Sendungsmagazins 1 gewährleistet werden kann.

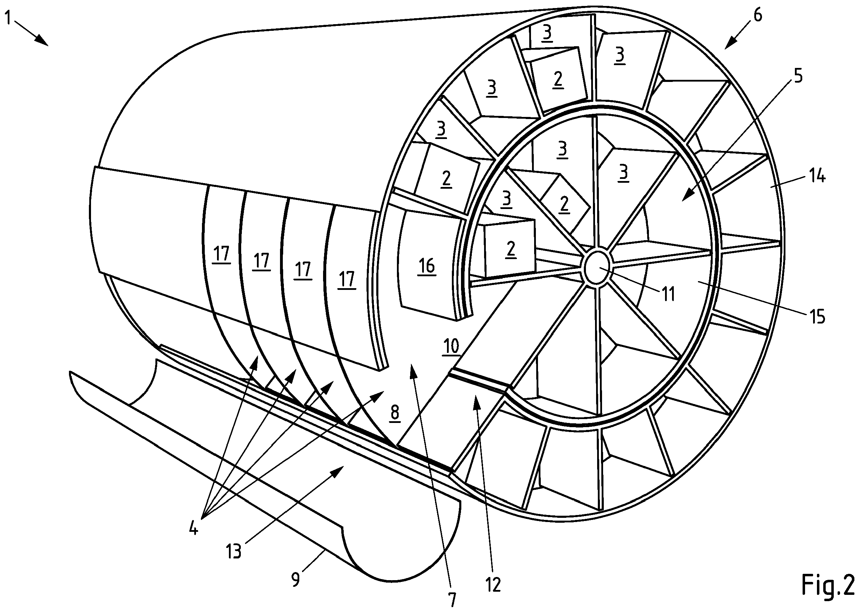

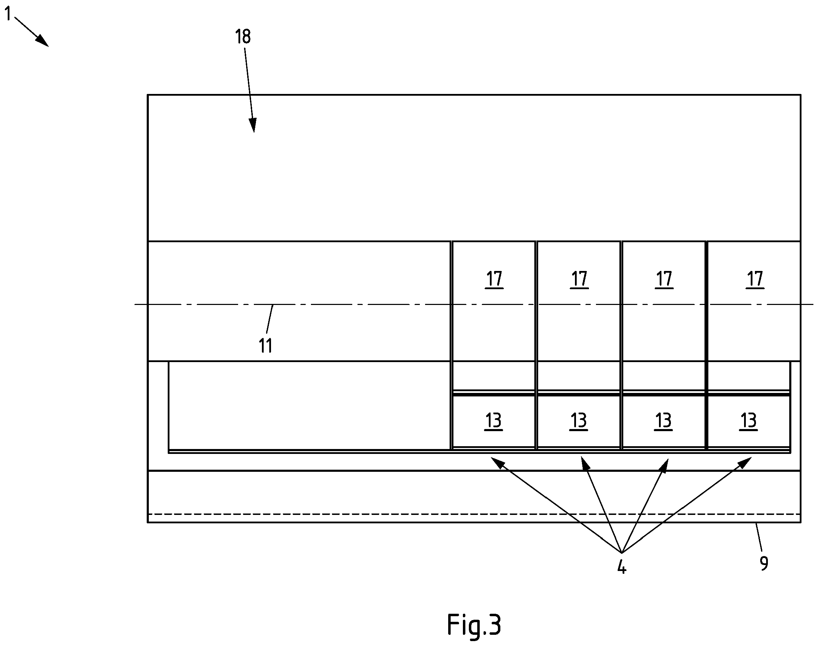

In der Fig. 2 ist das Sendungsmagazin 1 einer perspektivischen Ansicht dargestellt. Das Sendungsmagazin 1 weist vier Scheibenabschnitte 4 auf, wie sie in der Fig. 1 grundsätzlich dargestellt sind. Die Scheibenabschnitte 4, von denen grundsätzlich auch mehr oder weniger Scheibenabschnitte 4 vorgesehen sein könnten, sind nebeneinander und konzentrisch zueinander angeordnet. Dadurch ergibt sich eine gemeinsame zentrale Längsachse 11 des Sendungsmagazins 1, um das die Ringabschnitte 5,6 gedreht bzw. die Sendungskammern 3 geschwenkt oder bewegt werden. Zudem weist bei dem dargestellten und insoweit bevorzugten Sendungsmagazin 1 jeder Ringabschnitt 5,6 eine separate und separat zu bedienende Verschlusseinrichtung 16,17 auf. Die Verschlusseinrichtungen 16,17 könnten aber jeweils zu einer Verschlusseinrichtung verbunden werden, so dass für das Sendungsmagazin nur zwei Verschlusseinrichtungen 16,17 gehandhabt werden müssen. Alternativ oder zusätzlich kann das Sendungsmagazin 1 so ausgestaltet sein, dass die inneren Ringabschnitte 5 und/oder die äußeren Ringabschnitte 6 gemeinsam gedreht werden, um die im Sendungsmagazin 1 aufgenommenen Sendungen 2 abzugeben.
Insbesondere in der Fig. 3 ist dargestellt, dass das Sendungsmagazin 1 zusätzlich zu den vier Scheibenabschnitten 4 noch einen Betriebsabschnitt 18 aufweist, der neben den Scheibenabschnitten 4 vorgesehen ist. Beim dargestellten und insoweit bevorzugten Sendungsmagazin 1 ist der Betriebsabschnitt 18 konzentrisch zu den Scheibenabschnitten 4 ausgerichtet, der zudem etwa denselben Durchmesser aufweist wie die Scheibenabschnitte 4. Das dargestellte und insoweit bevorzugte Sendungsmagazin 1 ist also etwa in Form eines Zylinders ausgebildet.

Der Betriebsabschnitt 18 des dargestellten und insoweit bevorzugten Sendungsmagazins 1 dient der Steuerung der Abgabe der Sendungen 2 und der Zuordnung der aufgenommenen Sendungen 2 zu den Sendungskammern 3. Neben der Steuerung werden auch die Sendungskammern 3 bzw. die Ringabschnitte 5,6, zumindest teilweise über den Betriebsabschnitt 18 bewegt bzw. gedreht. Mit der Hilfe der Steuerung können einzelne Sendungskammern 3 gezielt in die Aufnahmeposition 8,10 und/oder die Abgabeposition 8,10 bewegt werden, und zwar abhängig davon, ob eine Sendung 2 aufzunehmen oder abzugeben ist. Im Übrigen können auch wenigstens einige Ringabschnitte 5,6 über den Betriebsabschnitt 18 geöffnet und geschlossen werden. Auch dies kann gesteuert durch eine Steuerung erfolgen, anhand derer bestimmt wird, welche Sendungen 2 zu welchen Zeitpunkten abgegeben werden sollen und welche nicht. Ferner kann der Betriebsabschnitt 18 die Position des Fahrzeugs 19, etwa in Form von GPS-Informationen, und bedarfsweise basierend auf den in dem Sendungsmagazin 1 aufgenommenen Sendungen 2 die nach vorgegebenen Kriterien optimale Route des Fahrzeugs 19 für die Zustellung der Sendungen 2 ermitteln. Zur Festlegung der Route können bedarfsweise auch Informationen betreffend die aktuelle und/oder zukünftige Verkehrssituation, der gewünschte Zustellzeitpunkt und/oder eine alternative Zustelladresse genutzt werden. Um die zuvor beschriebenen Aufgaben erfüllen zu können, weist der Betriebsabschnitt 18 des dargestellten und insoweit bevorzugten Sendungsmagazins 1 eine Antriebseinrichtung auf. Diese kann beispielsweise direkt einzelne Ringabschnitte 5,6 oder Verschlusseinrichtungen 16,17 verstellen. Es kann aber auch vorgesehen sein, dass die Antriebseinrichtung über einen Stababschnitt 20 des Fahrzeugs 19, der zentral in das Sendungsmagazin 1 eingreift, wenigstens einzelne Ringabschnitte 5,6 und/oder Verschlusseinrichtungen 16,17 antreibt. Ferner kann der Betriebsabschnitt 18 eine Erfassungseinrichtung aufweisen, die die aktuelle Stellung der einzelnen Sendungskammern 3 bzw. Ringabschnitte 5,6 erfasst. Diese Erfassungseinrichtung kann mit der Steuereinrichtung verbunden sein, die wenigstens die teilweise Steuerung des Sendungsmagazins 1 zum Aufnehmen und/oder Abgeben der Sendungen 2 steuert.

Bedarfsweise können die zuvor beschriebenen Mittel des Betriebsabschnitts 18 auch ganz oder teilweise als Teil des Fahrzeugs 19 und nicht des Sendungsmagazins 1 vorgesehen sein. Es kann aber vorteilhaft sein, die Mittel eher im Betriebsabschnitt 18 vorzusehen, um so eine untrennbare Einheit zu schaffen, was die Zuverlässigkeit bei der Durchführung des Verfahrens erhöhen kann. Die Fahrzeuge 19 können dann beliebig und flexibel mit den Sendungsmagazinen 1 gekoppelt werden. Allerdings kann beispielsweise der Antrieb der, insbesondere äußeren, Ringabschnitte vereinfacht werden, wenn dieser vom Fahrzeug 19 aus erfolgt, etwa über Antriebswalzen oder Antriebsräder, die beim Aufsatteln des Sendungsmagazins 1 mit den äußeren Ringabschnitten 6 gekoppelt werden.

Unabhängig von der Anordnung des wenigstens einen Betriebsabschnitts 18, kann das Sendungsmagazin 1 dazu ausgebildet sein, dass die inneren Ringabschnitte 5 gemeinsam bewegt werden und/oder dass die äußeren Ringabschnitte 6 gemeinsam bewegt werden. Es könnte bedarfsweise auch noch ein äußeres rohrförmiges Gehäuse vorgesehen sein, das die inneren und die äußeren Ringabschnitte 5,6 sowie bedarfsweise den Betriebsabschnitt 18 umfasst. Dann kann das rohrförmige Gehäuse die wenigsten eine Verschlusseinrichtung 17 aufweisen und/oder durch Anlegen der Ausgaberinne 9 verschlossen werden.

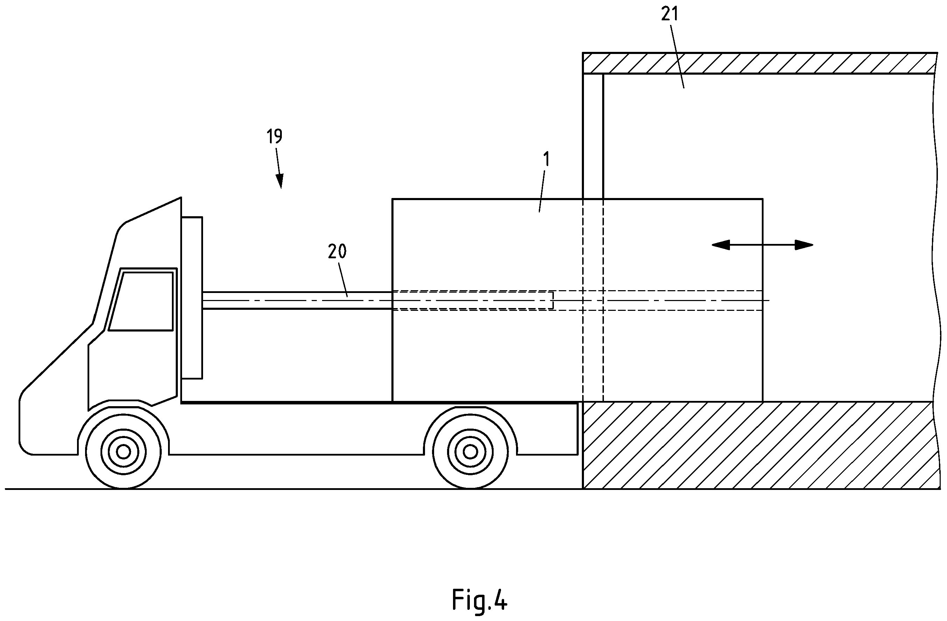

In der Fig. 4 ist eine beispielhafte Kopplung eines Sendungsmagazins 1 mit einem Fahrzeug 19 zum Zwecke der Zustellung der Sendungen 2 in dem Sendungsmagazin 1 dargestellt. Das Sendungsmagazin 1 wird zunächst ohne Anwesenheit des Fahrzeugs 19 in einer Zustellbasis 21, etwa einem sogenannten Paketzentrum, mit Sendungen bestückt. Anschließend wird das Sendungsmagazin 1 auf ein Fahrzeug 19 verbracht, und zwar bedarfsweise nachdem ein leeres Sendungsmagazin 1 von dem Fahrzeug 19 an die Zustellbasis 21 übergeben wurde. Zur Aufnahme des Sendungsmagazins 1 ist ein Stababschnitt 20 vorgesehen, der in eine innere Aussparung des Sendungsmagazins 1 eingreift. Der Stababschnitt 20 kann dabei beispielsweise über Vorsprünge und/oder Aussparungen mechanisch mit dem Sendungsmagazin 1, insbesondere mit bestimmten Ringabschnitten 5,6, gekoppelt werden, etwa um zu erfassen, welche Stellung einzelne Ringabschnitte 5,6 einnehmen, und/oder um einzelne Ringabschnitte 5,6 zu drehen.

Der Stababschnitt 20 kann alternativ aber auch Teil des Sendungsmagazin 1 sein und damit beim Abladen des Sendungsmagazins 1 beim Sendungsmagazin 1 verbleiben. Weiter kann der Stababschnitt 20 vom Sendungsmagazin 1 selbst angetrieben werden, um beispielsweise einzelne Ringabschnitte 5,6 zu drehen. Dann ist eine Verbindung des Stababschnitts 20 mit dem Fahrzeug 19 entbehrlich, wenn beispielsweise anderweitig eine sichere Verbindung zwischen dem Sendungsmagazin 1 und dem Fahrzeug 19 und/oder eine geeignete Positionierung des Sendungsmagazins 1 auf dem Fahrzeug 19 erreicht wird. Es kann aber alternativ oder zusätzlich beim Aufnehmen des Sendungsmagazins 1 durch das Fahrzeug 19, insbesondere zwangsweise, eine Verbindung des Stababschnitts 20 mit dem Fahrzeug 19 hergestellt werden.

Bei dem dargestellten und insoweit bevorzugten Fahrzeug 19 wird das Sendungsmagazin 1 nicht in einem Aufbau, etwa einem Kofferaufbau, des Fahrzeugs 19 aufgenommen, was jedoch möglich wäre, etwa um das Sendungsmagazin 1 gegen Umwelteinflüsse zu schützen. Durch den Verzicht auf einen Aufbau kann jedoch die Zugänglichkeit des Sendungsmagazins 1 verbessert und ein größeres Sendungsmagazin 1 verwendet werden, das mehr Platz für die Sendungen 2 und/oder für mehr Sendungen bereitstellt. Dann kann beispielsweise die Ausgaberinne 9 Öffnungen ausweisen, damit sich Schmutz und/oder Regenwasser nicht in der Ausgaberinne 9 sammelt. Die Ausgaberinne 9 kann alternativ oder zusätzlich an das Sendungsmagazin 1 angelegt werden, so dass kein oder wenig Schmutz und/oder Regenwasser in die Ausgaberinne 9 und/oder das Sendungsmagazin 1 gelangen kann. Durch die Ausgaberinne 9 kann das Sendungsmagazin 1 und/oder die Öffnung 13 wenigstens eines äußeren Ringabschnitts 6 verschlossen werden. Grundsätzlich kann das Sendungsmagazin ein äußeres, insbesondere rohrförmiges, Gehäuse aufweisen, in dem die inneren und äußeren Ringabschnitte 5,6 sowie bedarfsweise der Betriebsabschnitt 18 aufgenommen sind. Dieses Gehäuse könnte dann zudem etwa durch die Ausgaberinne 9 oder eine andere Verschlusseinrichtung verschlossen werden, um ein versehentliches Abgeben von Sendungen und/oder ein Eindringen von Schmutz und/oder Feuchtigkeit zu verhindern.

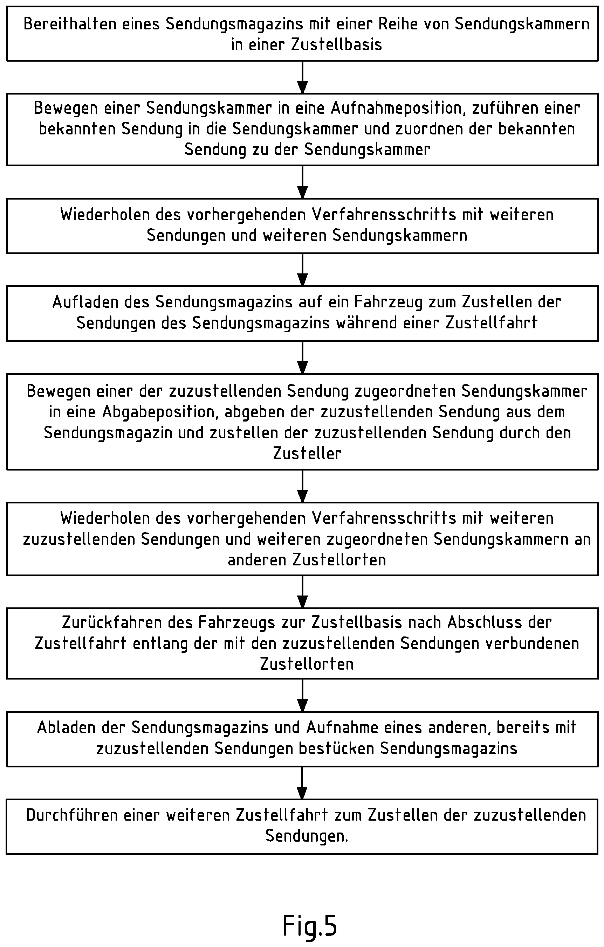

In der Fig. 5 ist ein Fließbild des Verfahrens zur Zustellung von Sendungen 2 dargestellt. In einem ersten Schritt werden die Sendungen 2 in einer Zustellbasis 21 in ein Sendungsmagazin 1 verbracht. Dabei wird eine Sendungskammer 3 in eine Aufnahmeposition 8,10 bewegt und eine Sendung 2 in die in der Aufnahmeposition 8,10 befindliche Sendungskammer 3 eingebracht. Dabei wird anhand der Stellung der Sendungskammern 3 festgehalten, in welche Sendungskammer 3 eine Sendung 2 eingebracht worden ist. Außerdem wurde zuvor ein Code der eingebrachten Sendung 2 gescannt, so dass bekannt ist, wo diese Sendung 2 zuzustellen ist und in welcher Sendungskammer 3 diese Sendung 2 bis zu ihrer Zustellung zwischengelagert ist. Dasselbe erfolgt mit einer Reihe weiterer Sendungen 2 und Sendungskammern 3. Sind alle Sendungen 2 für eine Zustellfahrt in dem Sendungsmagazin 1 aufgenommen, wird das Sendungsmagazin 1 an ein Fahrzeug 19 übergeben, mit dem die Zustellung der Sendungen 2 bewirkt wird. An einzelnen Orten entlang der Route des Fahrzeugs 19 hält dieses an und es wird die dort zuzustellende Sendung 2 von dem Sendungsmagazin 1 abgegeben, indem die Sendungskammer 3 mit der entsprechenden Sendung 2 in eine Abgabeposition 8,10 bewegt wird. Nachdem die abgegebene Sendung 2 zugestellt ist, fährt das Fahrzeug 19 weiter zu dem nächsten Zustellort, um dort auf dieselbe Weise die nächste Sendung 2 zuzustellen. Nachdem die Sendungen 2 des Sendungsmagazins 1 zugestellt sind bzw. nur noch nicht zustellbare Sendungen 2 in dem Sendungsmagazin 1 aufgenommen sind, fährt das Sendungsmagazin 1 zur Zustellbasis 21 zurück, um das Sendungsmagazin 1 gegen ein anderes, bereits mit Sendungen 2 beladenes Sendungsmagazin 1 auszutauschen und erneut eine bestimmte Route zum Zustellen der neuen Sendungen 2 abzufahren und dabei die Sendungen 2 an den dafür vorgesehenen Zustellorten zuzustellen.

## Patentansprüche

1. Verfahren zum Zustellen von Sendungen (2),
- bei dem in einer Zustellbasis (21) unterschiedliche Sendungskammern (3) eines Sendungsmagazins (1) mit unterschiedlichen Sendungen (2) beladen werden,
- bei dem beim Beladen des Sendungsmagazins (1) unterschiedliche Sendungskammern (3) nacheinander in eine Aufnahmeposition (8,10) zur Aufnahme wenigstens einer Sendung (2) und anschließend in eine Lagerposition zum Zwischenlagern der aufgenommenen Sendungen (2) bewegt werden,
- bei dem die Zuordnung der beladenen Sendungskammern (3) zu den jeweils in den Sendungskammern (3) aufgenommenen Sendungen (2) dokumentiert wird,
- bei dem das mit Sendungen (2) beladene Sendungsmagazin (1) an ein Fahrzeug (19) zum Zustellen der Sendungen(2), vorzugsweise nach einem der Ansprüche 7 bis 14, übergeben wird und
- bei dem die mit Sendungen (2) beladenen Sendungskammern (3) nacheinander in eine Abgabeposition (8,10) zum Abgeben der der jeweiligen Sendungskammer (3) zugeordneten Sendung (2) zum Zwecke der Zustellung bewegt werden.

2. Verfahren nach Anspruch 1,
- bei dem die Sendungskammern (3) durch Drehung wenigstens eines Teils des Sendungsmagazins (1), insbesondere wenigstens eines Sendungskammern (3) aufweisenden Ringabschnitts (5,6), von der Aufnahmeposition (8,10) in die Lagerposition und/oder von der Lagerposition in die Abgabeposition (8,10) bewegt werden und/oder
- bei dem die wenigstens eine Sendungskammer (3) zum Aufnehmen der Sendung (2) in der Aufnahmeposition (8,10) geöffnet, zum Abgeben der Sendung (2) in der Abgabeposition (8,10) geöffnet und/oder zum Lagern der Sendung (2) in einer Lagerposition geschlossen wird und/oder
- bei dem wenigstens eine Öffnung (12,13) des Ringabschnitts (5,6) zum Aufnehmen der Sendung (2) in der Aufnahmeposition (8,10) geöffnet, zum Abgeben der Sendung (2) in der Abgabeposition (8,10) geöffnet und/oder zum Lagern der Sendung (2) in einer Lagerposition geschlossen wird.

3. Verfahren nach Anspruch 1 oder 2,
bei dem die Sendungen (2) zum Beladen der Sendungskammern (3) oder zum Abgeben der Sendung (2) aus der Sendungskammer (3) eines inneren Ringabschnitts (5) durch wenigstens einen konzentrisch angeordneten, vorzugsweise ebenfalls eine Mehrzahl von Sendungskammern (3) aufweisenden äußeren Ringabschnitt (6) hindurch bewegt werden.

4. Verfahren nach einem der Ansprüche 1 bis 3,
- bei dem die Sendungskammern (3) unter Ausnutzung der Schwerkraft mit Sendungen (2) beladen werden und/oder
- bei dem die Sendungen (2) aus den Sendungskammern (3) unter Ausnutzung der Schwerkraft abgegeben werden und/oder
- bei dem das Sendungsmagazin (1) in einer Ausrichtung mit Sendungen (2) beladen wird, während die Sendungen (2) in einer anderen Ausrichtung des Sendungsmagazins (1) abgegeben werden, wobei, vorzugsweisem, die eine Ausrichtung in der Zustellbasis (21) und die andere Ausrichtung auf dem Fahrzeug (19) eingenommen wird.

5. Verfahren nach einem der Ansprüche 1 bis 4,
- bei dem die Sendungen (2) in Sendungskammern (3) einer Mehrzahl von, vorzugsweise axial nebeneinander vorgesehenen, Scheibenabschnitten (4) aufgenommen werden, wobei die Scheibenabschnitte (4) jeweils wenigstens einen, vorzugsweise wenigstens zwei konzentrisch angeordnete, Sendungskammern (3) aufweisenden Ringabschnitt (5,6) aufweisen und/oder
- bei dem wenigstens ein innerer Ringabschnitt (5) und ein konzentrisch zum inneren Ringabschnitt (5) angeordneter äußerer Ringabschnitt (6) unabhängig voneinander um ihre Längsachse (11) gedreht werden, um in den Sendungskammern (3) der Ringabschnitte (5,6) Sendungen (2) aufzunehmen und/oder Sendungen (2) aus den Sendungskammern (3) der Ringabschnitte (5,6) abzugeben.

6. Verfahren nach einem der Ansprüche 1 bis 5,
- bei dem wenigstens eine nicht zustellbare bereits vom Sendungsmagazin (1) abgegebene Sendung (2), insbesondere nach einem vergeblichen Zustellversuch, in wenigstens einen Ringabschnitt (5,6) gelegt und, vorzugsweise, nach Schließen des Ringabschnitts (5,6) und/oder der jeweiligen Sendungskammer (3), der Ringabschnitt (5,6) gedreht wird, um eine die Sendung (2) aufnehmende Sendungskammer (3) in eine Lagerposition zu bewegen und/oder
- bei dem die Sendungen (2), vorzugsweise automatisch, nacheinander in Abhängigkeit von der vom Fahrzeug (19) zurückgelegten Route aus dem Sendungsmagazin (1) abgegeben werden.

7. Fahrzeug (19) zum Zustellen von Sendungen mit einem lösbar mit dem Fahrzeug gekoppelten Sendungsmagazin (1) zur Aufnahme, Lagerung und Abgabe von Sendungen (2), vorzugsweise zur Durchführung des Verfahrens nach einem der Ansprüche 1 bis 6,
**dadurch gekennzeichnet, dass** das Sendungsmagazin (1) wenigstens einen Scheibenabschnitt (4) mit einem inneren Ringabschnitt (5) und einen konzentrisch zum inneren Ringabschnitt (5) angeordneten äußeren Ringabschnitt (6) aufweist, dass jeder Ringabschnitt (5,6) eine Mehrzahl, vorzugsweise in Umfangsrichtung verteilte Sendungskammern (3) aufweist, dass das Sendungsmagazin (1) wenigstens einen Betriebsabschnitt (18) zum Bewegen wenigstens bestimmter Sendungskammern aufweist und dass der Betriebsabschnitt (18) eine Erfassungseinheit zum Erfassen einer Aufnahmeposition (8,10) wenigstens einer Sendungskammer (3) beim Aufnehmen einer Sendung (2) in der jeweiligen Sendungskammer (3) zum Dokumentieren der Zuordnung der beladenen Sendungskammern (3) zu den jeweils in den Sendungskammern (3) aufgenommenen Sendungen (2) aufweist.

8. Fahrzeug nach Anspruch 7,
**dadurch gekennzeichnet, dass**
die Sendungskammern (3) und/oder die Ringabschnitte (5,6) jeweils eine nach außen weisende und verschließbare Öffnung (12,13) aufweisen.

9. Fahrzeug nach Anspruch 7 oder 8,
**dadurch gekennzeichnet, dass**
das Sendungsmagazin (1) wenigstens zwei, vorzugsweise axial nebeneinander angeordnete, Scheibenabschnitte (4) und/oder wenigstens einen axial neben wenigstens einem Scheibenabschnitt (4) angeordneten Betriebsabschnitt (18) zum Bewegen wenigstens bestimmter Sendungskammern (3), insbesondere Ringabschnitte (5,6) aufweist und/oder wenigstens einen, vorzugsweise axial neben wenigstens einem Scheibenabschnitt (4) angeordneten, Betriebsabschnitt (18) zum Verschließen wenigstens bestimmter Sendungskammern (3), insbesondere Ringabschnitte (5,6), aufweist.

10. Fahrzeug nach Anspruch 9,
**dadurch gekennzeichnet, dass**
der Betriebsabschnitt (18) wenigstens eine Antriebseinheit zum Bewegen wenigstens bestimmter Sendungskammern (3), insbesondere Ringabschnitte (5,6) und/oder zum Verschließen wenigstens bestimmter Sendungskammern (3) , insbesondere Ringabschnitte (5,6) aufweist und/oder dass der Betriebsabschnitt (18) wenigstens eine Steuereinheit zur Steuerung der Bewegung wenigstens einer bestimmten Sendungskammer (3) in eine Aufnahmeposition (8,10), eine Abgabeposition (8,10) und/oder Lagerposition nach wenigstens teilweise vorbestimmten Kriterien.

11. Fahrzeug nach einem der Ansprüche 7 bis 10,
**dadurch gekennzeichnet, dass** wenigstens ein Ringabschnitt (5,6), insbesondere alle Ringabschnitte (5,6), und/oder wenigstens eine Sendungskammer (3), insbesondere alle Sendungskammern (3), wenigstens eine Verschlusseinrichtung (16,17) zum Verschließen einer Öffnung (12,13) zum Aufnehmen und/oder Abgeben von Sendungen (2) aufweist.

12. Fahrzeug nach einem der Ansprüche 7 bis 11,
**dadurch gekennzeichnet, dass**
das Fahrzeug (19) eine Antriebseinrichtung zum Bewegen wenigstens bestimmter Sendungskammern (3), insbesondere Ringabschnitte (5,6), und/oder zum Verschließen wenigstens bestimmter Sendungskammern (3), insbesondere Ringabschnitte (5,6), aufweist.

13. Fahrzeug nach einem der Ansprüche 7 bis 12,
**dadurch gekennzeichnet, dass**
das Fahrzeug (19) einen in eine axiale Aussparung des Sendungsmagazins (1) eingreifenden Stababschnitt (20) aufweist und, vorzugsweise, dass der Stababschnitt (20) Mittel zum Antrieb wenigstens eines inneren Ringabschnitts (5,6) des Sendungsmagazins (1) und/oder Mittel zum Erfassen der Position von wenigstens einer Sendungskammer (3) wenigstens eines inneren Ringabschnitts (5,6) des Sendungsmagazins (1) aufweist.

14. Fahrzeug nach einem der Ansprüche 7 bis 13,
**dadurch gekennzeichnet, dass**
das Fahrzeug (19) und/oder das Sendungsmagazin (1) eine Verarbeitungseinrichtung aufweist, die anhand von Positionsinformationen, insbesondere GNSS (Global Navigation Satellite System)-Informationen, die Zustellinformation ermittelt, welche Sendung (2) als nächstes zugestellt werden soll, und die anhand dieser Zustellinformation die der entsprechenden Sendung (2) zugeordnete Sendungskammer (3) in eine Abgabeposition (8,10) zur Abgabe und Zustellung der entsprechenden Sendung (2) bewegt.

## Claims

1. Method for delivering postal items (2),
- in which different postal item chambers (3) of a postal item magazine (1) are loaded at a delivery base (21) with different postal items (2),
- in which during the loading of the postal item magazine (1) different postal item chambers (3) are moved successively to a receiving position (8, 10) for receiving at least one postal item (2) and are then moved to a storage position for the temporary storage of the received postal items (2),
- in which the allocation of the loaded postal item chambers (3) to the postal items (2) received in each case in the postal item chambers (3) is documented,
- in which the postal item magazine (1) loaded with postal items (2) is transferred to a vehicle (19) for the delivery of the postal items, preferably according to one of claims 7-14, and
- in which the postal item chambers (3) loaded with postal items (2) are moved successively to a release position (8, 10) for releasing the postal item (2) allocated to the respective postal item chamber (3), for the purposes of delivery.

2. Method according to claim 1,
- in which the postal item chambers (3) are moved by rotating at least a part of the postal item magazine (1), in particular at least of an annular section (5, 6) comprising postal item chambers (3), from the receiving position (8, 10) to the storage position and/or from the storage position to the release position (8, 10), and/or
- in which the at least one postal item chamber (3) is opened for receiving the postal item (2) in the receiving position (8, 10), is opened for releasing the postal item (2) in the release position (8, 10) and/or is closed for storing the postal item (2) in the storage position, and/or
- in which at least one opening (12, 13) of the annular section (5, 6) is opened for receiving the postal item (2) in the receiving position (8, 10), is opened for releasing the postal item (2) in the release position (8, 10), and/or is closed for storing the postal item (2) in a storage position.

3. Method according to claim 1 or 2, in which the postal items (2) are moved through at least one concentrically arranged outer annular section (6), preferably also comprising a plurality of postal item chambers (3), for the loading of the postal item chambers (3) or for the release of the postal item (2) from the postal item chamber (3) of an inner annular section (5).

4. Method according to one of claims 1 to 3,
- in which the postal item chambers (3) are loaded with postal items (2) by utilising the force of gravity and/or
- in which the postal items (2) are released from the postal item chambers (3) by utilising the force of gravity and/or
- in which the postal item magazine (1) is loaded with postal items (2) in one orientation, while the postal items (2) are released in another orientation of the postal item magazine (1), wherein preferably the one orientation is adopted in the delivery base (21) and the other orientation is adopted on the vehicle (19).

5. Vehicle according to one of claims 1 to 4,
- in which the postal items (2) are received in postal item chambers (3) of a plurality of disc sections (4), preferably provided axially adjacent to one another, wherein the disc sections (4) have in each case at least one, preferably at least two concentrically arranged, annular section (5, 6) comprising postal item chambers (3) and/or
- in which at least one inner annular section (5) and an outer annular section (6) arranged concentrically with respect to the inner annular section (5) are rotated independently of one another about their longitudinal axis, in order to receive postal items (2) in the postal item chambers (3) of the annular sections (5, 6) and/or release postal items (2) from the postal item chambers (3) of the annular sections (5, 6).

6. Method according to one of claims 1 to 5,
- in which at least one non-deliverable postal item (2) already released from the postal item magazine (1), in particular after an unsuccessful delivery attempt, is placed in at least one annular section (5, 6) and, preferably, after closing the annular section (5, 6) and/or the respective postal item chamber (3), the annular section (5, 6) is rotated in order to move a postal item chamber (3) receiving the postal item (2) to a storage position and/or
- in which the postal items (2) are released successively, preferably automatically, from the postal item magazine (1) depending on the route taken by the vehicle (19).

7. Vehicle (19) for delivering postal items with a postal item magazine (1) detachably coupled to the vehicle for receiving, storing and releasing postal items (2), preferably for executing the method according to one of claims 1 to 6, **characterised in that** the postal item magazine (1) comprises at least one disc section (4) with an inner annular section (5) and an outer annular section (6) arranged concentrically with respect to the inner annular section (5), **in that** each annular section (5, 6) comprises a plurality of postal item chambers, preferably distributed circumferentially, **in that** the postal item magazine (1) comprises at least one operating section (18) for moving at least specific postal item chambers, and that the operating section (18) comprises a detection unit for detecting a receiving position (8, 10) of at least one postal item chamber (3) during the reception of a postal item (2) in the respective postal item chamber (3) for the documentation of the allocation of the loaded postal item chamber (3) with respect to the postal items (2) received in each case in the postal item chambers (3).

8. Vehicle according to claim 7, **characterised in that** the postal item chambers (3) and/or the angular sections (5, 6) comprise in each case an outwardly oriented and closable opening (12, 13).

9. Vehicle according to claim 7 or 8, **characterised in that** the postal item magazine (1) comprises at least two disc sections (4), preferably arranged axially adjacent to one another, and/or at least one operating section (18) arranged axially adjacent to at least one disc section (4), for moving at least specific postal item chambers (3), in particular annular sections (5, 6), and/or at least one operating section (18), preferably arranged axially adjacent to at least one disc section (4), for closing at least specific postal item chambers (3), in particular annular sections (5, 6).

10. Vehicle according to claim 9, **characterised in that** the operating section (18) comprises at least one drive unit for moving at least specific postal item chambers (3), in particular annular sections (5, 6), and/or for closing at least specific postal item chambers (3), in particular annular sections (5, 6), and/or that the operating section (18) comprises at least one control unit for controlling the movement of at least one specific postal item chamber (3) to a receiving position (8, 10), to a release position (8, 10), and/or to a storage position according to at least partially predetermined criteria.

11. Vehicle according to one of claims 7 to 10, **characterised in that** at least one annular section (5, 6), in particular all annular sections (5, 6), and/or at least one postal item chamber (3), in particular all postal item chambers (3), comprises at least one closure device (16, 17) for closing an opening (12, 13) for receiving and/or releasing postal items (2).

12. Vehicle according to one of claims 7 to 11, **characterised in that** the vehicle (19) comprises a drive device for moving at least specific postal item chambers (3), in particular annular sections (5, 6), and/or for closing at least specific postal item chambers (3), in particular annular sections (5, 6).

13. Vehicle according to one of claims 7 to 12, **characterised in that** the vehicle (19) comprises a rod portion (20) engaging in an axial recess of the postal item magazine (1), and preferably that the rod portion (20) comprises means for driving at least one inner annular section (5, 6) of the postal item magazine (1) and/or means for detecting the position of at least one postal item chamber (3) of at least one inner annular section (5, 6) of a postal item magazine (1).

14. Vehicle according to one of claims 7 to 13, **characterised in that** the vehicle (19) and/or the postal item magazine (1) comprises a processing device, which on the basis of position information, in particular GNSS (Global Navigation Satellite System) information, determines the delivery information regarding which postal item (2) is to be delivered next, and which on the basis of this delivery information moves the postal item chamber (3) associated with the corresponding postal item (2) to a release position (8, 10) for releasing and delivering the corresponding postal item (2).

## Revendications

1. Procédé destiné à la distribution d'expéditions (2),
- pour lequel, dans un centre de distribution (21), différents compartiments d'expédition (3) d'un magasin d'expédition (1) sont chargés avec différentes expéditions (2),
- pour lequel, lors du chargement du magasin d'expédition (1), différents compartiments d'expédition (3) sont déplacés, l'un après l'autre, dans une position de réception (8, 10) pour réceptionner au moins une expédition (2) et, par la suite, dans une position de stockage pour le stockage intermédiaire des expéditions (2) réceptionnées,
- pour lequel l'attribution des compartiments d'expédition (3) chargés aux expéditions (2) réceptionnées respectivement dans les compartiments d'expédition (3) est documentée,
- pour lequel le magasin d'expédition (1) chargé avec des expéditions (2) est transmis à un véhicule (19) destiné à la distribution d'expéditions (2), de préférence selon l'une des revendications 7 à 14, et
- pour lequel les compartiments d'expédition (3) chargés avec des expéditions (2) sont déplacés à des fins de la distribution, l'un après l'autre, dans une position de transfert (8, 10) pour le transfert de l'expédition (2) attribuée au compartiment d'expédition (3) respectif.

2. Procédé selon la revendication 1,
- pour lequel les compartiments d'expédition (3) sont déplacés, par la rotation d'au moins une partie du magasin d'expédition (1), en particulier d'au moins une section annulaire (5, 6) présentant au moins un compartiment d'expédition (3), de la position de réception (8, 10) dans la position de stockage et/ou de la position de stockage dans la position de transfert (8, 10) et/ou
- pour lequel le au moins compartiment d'expédition (3) est ouvert pour la réception de l'expédition (2) dans la position de réception (8, 10), est ouvert pour le transfert de l'expédition (2) dans la position de transfert (8, 10) et/ou est fermé pour le stockage de l'expédition (2) dans une position de stockage et/ou
- pour lequel au moins une ouverture (12, 13) de la section annulaire (5, 6) est ouverte pour la réception de l'expédition (2) dans la position de réception (8, 10), est ouverte pour le transfert de l'expédition (2) dans la position de transfert (8, 10) et/ou est fermée pour le stockage de l'expédition (2) dans la position de stockage.

3. Procédé selon la revendication 1 ou 2,
pour lequel les expéditions (2) pour le chargement des compartiments d'expédition (3) ou pour le transfert de l'expédition (2) à partir du compartiment d'expédition (3) d'une section annulaire intérieure (5) sont déplacées à travers au moins une section annulaire extérieure (6) agencée de manière concentrique, présentant également, de préférence, plusieurs compartiments d'expédition (3).

4. Procédé selon l'une des revendications de 1 à 3,
- pour lequel les compartiments d'expédition (3) sont chargés avec des expéditions (2) en utilisant la force de gravité et/ou
- pour lequel les expéditions (2) sont transférées à partir des compartiments d'expédition (3) en utilisant la force de gravité et/ou
- pour lequel le magasin d'expédition (1) est chargé avec des expéditions (2) dans une orientation, tandis que les expéditions (2) sont transférées dans une autre orientation du magasin d'expédition (1), la une orientation étant prise, de préférence, dans le centre de distribution (21) et l'autre orientation étant prise, de préférence, sur le véhicule (19).

5. Procédé selon l'une des revendications 1 à 4,
- pour lequel les expéditions (2) sont réceptionnées dans des compartiments d'expédition (3) d'un grand nombre de sections de disque (4) prévues, de préférence, axialement une à côté de l'autre, les sections de disque (4) présentant respectivement au moins une, de préférence au moins deux agencées de manière concentrique, section annulaire (5, 6) présentant des compartiments d'expédition (3) et/ou
- pour lequel au moins une section annulaire intérieure (5) et une section annulaire extérieure (6), agencée de manière concentrique par rapport à la section annulaire intérieure (5), sont tournées, indépendamment l'une de l'autre, autour de leur axe longitudinal (11), afin de recevoir des expéditions (2) dans les compartiments d'expédition (3) des sections annulaires (5, 6) et/ou transférer des expéditions (2) provenant des compartiments d'expédition (3) des sections annulaires (5, 6).

6. Procédé selon l'une des revendications 1 à 5,
- pour lequel au moins une expédition (2) ne pouvant pas être distribuée et étant déjà transférée par le magasin d'expédition (1), en particulier après une tentative de distribution infructueuse, est placée dans au moins une section annulaire (5, 6) et, de préférence, après la fermeture de la section annulaire (5, 6) et/ou du compartiment d'expédition respectif (3), la section annulaire (5, 6) est tournée, afin de déplacer un compartiment d'expédition (3), destiné à recevoir l'expédition (2), dans une position de stockage et/ou
- pour lequel les expéditions (2) sont transférées, de préférence automatiquement, une après l'autre, à partir du magasin d'expédition (1) en fonction du chemin parcouru par le véhicule (19).

7. Véhicule (19) destiné à la distribution d'expéditions doté d'un magasin d'expédition (1) couplé de manière amovible au véhicule, pour la réception, le stockage et le transfert d'expéditions (2), de préférence pour la mise en œuvre du procédé selon l'une des revendications de 1 à 6,
**caractérisé en ce que** le magasin d'expédition (1) présente au moins une section de disque (4) avec une section annulaire intérieure (5) et une section annulaire extérieure (6) agencée de manière concentrique par rapport à la section annulaire intérieure (5) et **en ce que** chaque section annulaire (5, 6) présente un grand nombre de compartiments d'expédition (3), de préférence répartis de manière circonférentielle, **en ce que** le magasin d'expédition (1) présente au moins une section opérationnelle (18) destinée à déplacer au moins des compartiments d'expédition déterminés et **en ce que** la section opérationnelle (18) présente une unité de détection destinée à détecter une position de réception (8, 10) d'au moins un compartiment d'expédition (3) lors de la réception d'une expédition (2) dans le compartiment d'expédition (3) respectif pour documenter l'attribution des compartiments d'expédition (3) chargés aux expéditions (2) réceptionnées respectivement dans les compartiments d'expédition (3).

8. Véhicule selon la revendication 7,
**caractérisé en ce que** les compartiments d'expédition (3) et/ou les sections annulaires (5, 6) présentent respectivement une ouverture (12, 13) tournée vers l'extérieur et pouvant être fermée.

9. Véhicule selon la revendication 7 ou 8,
**caractérisé en ce que** le magasin d'expédition (1) présente au moins deux sections de disque (4), de préférence agencées axialement l'une à côté de l'autre, et/ou au moins une section opérationnelle (18) agencée axialement à proximité d'au moins une section de disque (4) pour le déplacement d'au moins des compartiments d'expédition (3) déterminés, en particulier des sections annulaires (5, 6) et/ou présente au moins une section opérationnelle (18) agencée, de préférence, axialement à proximité d'au moins une section de disque (4) pour la fermeture d'au moins des compartiments d'expédition (3) déterminés, en particulier des sections annulaires (5, 6).

10. Véhicule selon la revendication 9,
**caractérisé en ce que** la section opérationnelle (18) présente au moins une unité d'entraînement pour le déplacement au moins de compartiments d'expédition (3) déterminés, en particulier de sections annulaires (5, 6) et/ou pour la fermeture au moins de compartiments d'expédition (3) déterminés, en particulier de sections annulaires (5, 6) et/ou **en ce que** la section opérationnelle (18) présente au moins une unité de commande destinée à commander le déplacement d'au moins un compartiment d'expédition (3) déterminé dans une position de réception (8, 10), une position de transfert (8, 10) et/ou une position de stockage en fonction de critères au moins partiellement prédéfinis.

11. Véhicule selon l'une des revendications 7 à 10,
**caractérisé en ce qu'**au moins une section annulaire (5, 6), en particulier toutes les sections annulaires (5, 6), et/ou au moins un compartiment d'expédition (3), en particulier tous les compartiments d'expédition (3), présentent au moins un dispositif de fermeture (16, 17) pour fermer une ouverture (12, 13) pour la réception et/ou le transfert d'expéditions (2).

12. Véhicule (19) selon l'une des revendications 7 à 11,
**caractérisé en ce que** le véhicule (19) présente un dispositif d'entraînement pour le déplacement au moins de compartiments d'expédition (3) déterminés, en particulier de sections annulaires (5,6), et/ou pour la fermeture au moins de compartiments d'expédition (3) déterminés, en particulier de sections annulaires (5, 6).

13. Véhicule selon l'une des revendications 7 à 12,
**caractérisé en ce que** le véhicule (19) présente une section de tige (20) engagée dans un évidement axial du magasin d'expédition (1) et, de préférence, **en ce que** la section de tige (20) présente des moyens pour entraîner au moins une section annulaire intérieure (5, 6) du magasin d'expédition (1) et/ou des moyens pour la détection de la position d'au moins un compartiment d'expédition (3) d'au moins une section annulaire intérieure (5, 6) du magasin d'expédition (1).

14. Véhicule selon l'une des revendications 7 à 13,
**caractérisé en ce que** le véhicule (19) et/ou le magasin d'expédition (1) présente un dispositif de traitement qui, à l'aide d'informations de position, en particulier d'informations GNSS (Global Navigation Satellite System), détermine les informations de distribution, quelle expédition (2) doit être distribuée ensuite, et qui, à l'aide de cette information de distribution, déplace le compartiment d'expédition (3) attribué à l'expédition (2) respectif dans une position de transfert (8, 10) pour le transfert et la distribution de l'expédition (2) correspondante.
